# EUROPEAN PATENT APPLICATION

(11) **EP 1 262 678 A2**
(43) Date of publication of application: **04.12.2002**
(21) Application number: 01850089.2
(22) Date of filing: 18.05.2001
(51) Int. Cl.: F16D 1/09

(54) **An attachment unit**

(30) Priority: 23.05.2000 SE 0001907
(71) Applicant: SKF MEKAN AB, S-641 21 Katrineholm (SE)
(72) Inventor: Östling, Sture, 641 25 Katrineholm (SE); Axelsson, Uno, 641 35 Katrineholm (SE)
(74) Representative: Westman, Börje

(57) **Abstract**

Attachment means for arresting a machine member (3) having a cylindrical bore on a shaft (1), wherein a pair of elements having mating, co-operating taper surfaces facing each other is inserted between member and shaft, and intended at mutual displacement to increase a clamping force between the machine member and the shaft, wherein the means incorporates a first thin-walled sleeve member (5) having a cylindrical inner surface arranged to enclose a portion of the shaft (1), and a second, thin-walled sleeve member (6) having a cylindrical outer surface arranged to engage the bore of the machine member (3), said second sleeve member (6) enclosing the first sleeve member (5), whereby the first and second sleeve members (5, 6) have a plurality of co-operating saw-tooth-shaped, axially tapering sections, and a ring member (7) is provided about the shaft (1), and has in its hole has circumferential groove (8), spaced apart from the side faces of the ring member (7), the first sleeve member (5) projecting outside the second sleeve member (6), and has an exterior circumferential ridge (9), projecting into the groove (8), for axial interconnection of ring member and second sleeve member, the ring member (7) having means (10) for applying a force on an end edge on the second sleeve member for causing such mutual displacement between the first and second sleeve members (5, 6).

## Description

The present invention refers to an attachment unit intended for arresting a machine member, such as a pulley, a gear wheel, a bearing or the like to a cylindrical shaft, which machine member has a substantially cylindrical bore arranged to be fitted on and arrested to the cylindrical shaft, and of the kind defined in the preamble of claim 1.

Mounting of different, bore-provided machine members, such as fan wheels, belt pulleys and the like, on a cylindrical shaft, in such a manner that the machine member will not move circumferentially and/or axially relative to the shaft, can be effected in different manners. Thus it is common to use a key-way in the shaft and/or in the boss or hub of the machine member, and a key inserted in said key-way for preventing relative circumferential movement. However, such arresting requires a price increasing machining of the key-way in the shaft, it reduces the strength of the shaft and it furthermore can hardly be used together with light and inexpensive hollow shafts.

Similar limitations can be seen with use of thread joints, as this requires thread cutting of shaft and inner surface of the bore in the machine member.

Such mounting can also be effected using a tapering adapter sleeve, but that in turn requires that either the shaft or the bore of the machine member has a corresponding taper, which means increased manufacturing costs.

Cylindrical shaft and hub joints of course can also be obtained with press fit, effected with or without use of pressure oil arrangement, but also in this case it is difficult to use hollow shafts, due to large radially inward forces.

A clamping device highly eliminating the above drawbacks is earlier known. This device, named Ringfeder®, manufactured by Ringfeder GmbH, Krefeld, Germany, consists of pairs of ring members of short axial extension and having mating tapering surfaces, thus that a first closed ring member of the pair has a cylindrical bore intended to be arranged in contact with the envelope surface of the shaft, and a tapering surface on its opposite side. The second closed ring member of the pair has a cylindrical outer envelope surface intended to contact the cylindrical bore of the member to be attached to the shaft, whereas this second ring member has a bore taper substantially corresponding to that of the outer envelope surface of the first ring member. When the first ring member of the pair has been fitted on the shaft and the second ring member has been loosely fitted thereabout, and also loosely inside the bore of the machine member to be fitted, it is possible to achieve a good grip between the two ring members and via the intermediary of those ring members also between the shaft and the machine member, by pushing the second ring member axially along the external envelope surface of the first ring member, thereby gradually increasing the radial width of the two ring members. For further increasing the retaining force between shaft and machine member, the pairs of Ringfeder® rings then can be multiplied for achieving the desired grip. The first ring members of the consecutive pairs of ring members thereby are positioned with their adjacent gable faces engaging each other, and also the second ring member in the adjacent pair. The axial force required for mutually displacing the ring members is obtained by means of a flange ring, which is moved axially towards the machine member by being acted upon by screws tightened in threaded bores in the machine member.

Due to the fact that the pairs of ring members thus are not interconnected, there is always a risk for misalignment as the ring members are not centred. This means that the establishment of the grip between shaft and machine member might vary from one occasion to another, which of course is not desirable. The plurality of separate elements, i.e. a number of pairs of separate ring members furthermore makes stock-keeping and handling of these attachment means extensive and cumbersome.

An essential drawback is that the attachment means, once mounted on the shaft is very difficult to dismount in a manner not damaging itself or the shaft. For this purpose it earlier has been provided a second unit, corresponding to the attachment means described, and which is arranged at the opposite side of the attachment means relative to the first mentioned means, which is intended for the mounting operation. With such an additional dismounting means it is possible to remove the attachment means by untightening the screws used for mounting, and thereupon tightening the corresponding screws in the additional unit, thereby casing them to press the sleeves in dismounting direction. When it is difficult to reach both sides of the attachment device, this solution is not useful, and furthermore it means an increase in costs.

The purpose of the present invention is to provide an attachment means, which in a simple and still efficient manner permits interconnection of a cylindrical shaft and a machine member having a cylindrical bore, without the necessity of machining the components to close tolerances, and where all elements forming part of the attachment means are held together as a unit also before mounting, thereby facilitating handling and storing thereof.

Another purpose of the attachment means according to the invention is to provide a device, which can be easily dismounted without especial tools or a double set of ring members for applying forces in opposite directions, and these purposes have been met in that the attachment means according to the invention has been given the features defined in the accompanying claim 1.

Hereinafter, the invention will be further described and elucidated by way of non-limiting embodiments shown in the accompanying drawing.

Fig. 1 shows in cross section a rolling bearing attached to a shaft by means of the attachment means according to the invention, and

Fig. 2 is a corresponding view schematically showing an arbitrary machine member attached to a shaft by means of a somewhat modified attachment means according to the invention.

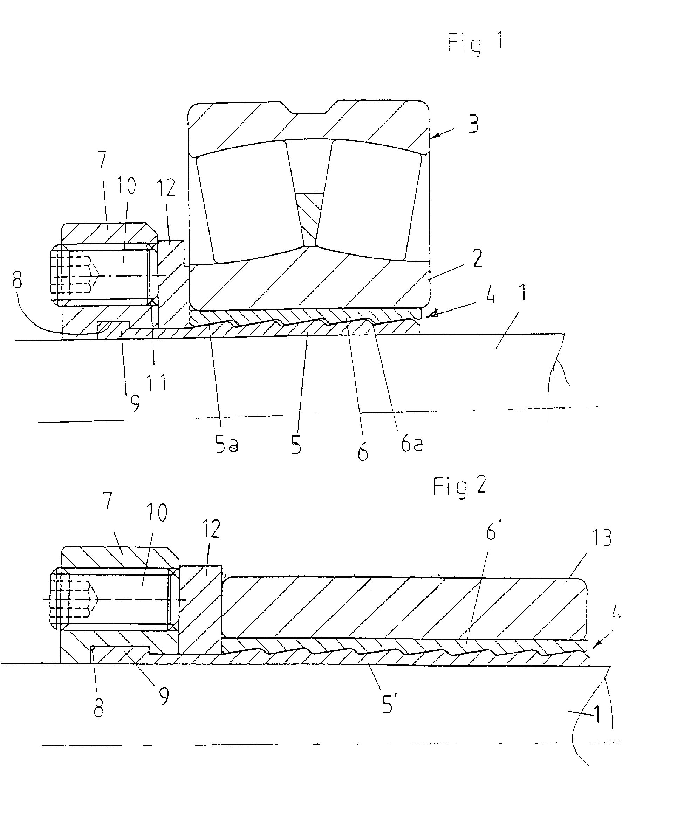

Fig. 1 shows a portion of a shaft 1 on which is fitted the inner race ring 2 of a roller bearing 3, whereby the inner race ring 2 is connected to the shaft 1 by means of an attachment means 4 in accordance with the present invention. This attachment means 4 incorporates a two-piece sleeve, consisting of a first thin-walled sleeve member 5 having a cylindrical inner surface arranged to enclose a portion of the shaft 1, and a second, thin-walled sleeve member 6 having a cylindrical outer surface arranged to engage the bore of the machine member, e.g. the bearing 3, whereby the second sleeve member 6 is arranged to enclose the first sleeve member 5. The opposed surfaces of the first and second sleeve members 5, 6 have a plurality of mating consecutive saw-tooth-shaped, axially tapering sections 5a, 6a, respectively. Furthermore a ring member 7 is provided about the shaft 1, axially spaced apart from the second sleeve member 6. The inner envelope surface of this ring member 7 has a circumferential groove 8, spaced apart from the side faces of the ring 7. The first sleeve member 5 projects outside one first end edge of the second sleeve member 6, and has an exterior circumferential ridge 9, projecting into the groove 8 in the ring member, whereby the ring member 7 and the first sleeve member 5 are axially interconnected

The ring member 7 has means for applying an external pushing force on the said first one end edge on the second sleeve 6 member for causing mutual axial displacement between the first and second sleeve members 5, 6 thereby increasing the grip between the shaft 1 and the machine member 4. These force transferring means are preferably constituted by at least one, but preferably a number of set screws 10, which can be screwed into threaded, axial through-holes 11, evenly spaced apart around the ring member 7, in such a manner that the pushing force applied by the set screw or set screws is transferred as an axial force to the second sleeve member 6. In the embodiment shown a washer 12 is provided between the tips of the set screws 10 and the opposed end edge of the second sleeve member 6. The washer 12 has a bigger outer diameter than the second sleeve member and is therefore also transferring the axial pushing force also to the machine member as such, i.e. to the inner race ring 2 of the bearing 4 illustrated in this embodiment.

When tightening the set screw(s), the second sleeve member 6 thus will be pushed axially, whereas the first sleeve member is kept stationary in relation to the ring member 7 and to the second sleeve member 6, due to the engagement of the ridge 9 in the groove 8. The joint will be strong enough to prevent the inner bearing ring 2 from moving circumferentially as well as axially relative to the shaft 1, without any further components preventing such motions.

When the attachment means shall be dismounted this is easily made, in that the set screws 10 are untightened, whereupon a light blow on the ring member 7 in axial direction causes the first sleeve member 5 to move relative to the second sleeve 6, in a direction reducing and finally eliminating the grip against the shaft. This is obtained via the interconnection of the ring member 7 and the first sleeve 5, via the ridge 9 entering in the groove 8.

Fig. 2 shows in similar manner how an arbitrary machine member 13, which is intimated as a sleeve only, but which can be any type of machine member, such as a driven gear wheel, a belt pulley or the like, which is fitted to a shaft 1, by means of an attachment means 4 similar to that illustrated in Fig. 1 and having the same associated components. The main difference between this embodiment and that shown in Fig. 1 is that the overall axial length of the co-operating, saw-tooth-formed surfaces of the first and second sleeve members 5' and 6' are considerably bigger than that of the previous embodiment. Such longer sleeve members 5', 6' are chosen where the forces to be transferred between the shaft and the machine member are big, i.e. where the machine member is a driven wheel or the like. Beside the difference in length of the first and second sleeve members 5', 6', there is no difference between the attachment means 4 of the two embodiments, as also the attachment means in Fig. 2 has a ring member 7 with through-holes for set screws 10, which are arranged to push via a washer 12 against the adjacent end edge of the second sleeve member 6', and wherein the ring member 7 and the first sleeve member 5' are axially interconnected by co-operation between a groove 8 in the inner envelope surface of the ring member 7 and a ridge 9 provided on a part of the first sleeve member 5', projecting from the second sleeve member 6'.

The two-piece sleeve member 4 as earlier said, comprises a first or inner sleeve member 5, 5' with a cylindrical inner surface and an external surface provided with a continuous axial series of tapering, substantially saw-tooth-shaped surface elements, where a first element tapers from a bigger diameter to a smaller diameter, followed by a consecutive, second surface element, connected to the first element via a substantially radial wall member, thus that the end of the second section adjacent the narrower end of the first section 15b has substantially the same outer diameter as the biggest end of the first section, i.e. the end remote from the second section. The second section is related to and connected to a following, consecutive section, etcetera, in the same manner as the relation between the first and second sections. The second sleeve member 6,6' of the two-piece sleeve is designed as a reverse image of the first sleeve member 5, 5' and has a cylindrical outer envelope surface, whereas its inner surface is provided with saw-tooth-shaped surface elements being complementary to those of the first sleeve member 5, 5'. The second sleeve member 6, 6' is arranged to enclose the inner sleeve member 5, 5', with a section of the inner sleeve member 5, 5' projecting axially out from the interior of the second sleeve member 6, 6'.

The ring member 7 of the attachment means 4 is provided with a number of axial through-holes 11, each one receiving a set screw 10 projecting there through and being positioned to transfer axial force to the projecting portion of the first sleeve member 5, 5', and by tightening the screw(s) 10, it is possible to make the first sleeve member move axially relative to the second sleeve 6, 6', thereby causing the co-operating tapering surfaces of the first and the second sleeves to slide against each other, thereby first filling up a clearance between machine member and shaft, (which clearance facilitates positioning of the machine member and the attachment device on the shaft before the attachment means is activated), and thereupon at continued tightening of the screws, increasing the grip between the attachment means 4 and the shaft 1 and between the attachment means and the interior of the machine member 3,13, until a firm grip is obtained in circumferential as well as in axial direction, and without the necessity of using keyslots, threads or the like. By the fact that the consecutive saw-tooth-shaped taper portions are made in an integral unit it is also achieved that the attachment means is centred in its seat without risks for misalignment, and furthermore the handling and stock-keeping of the attachment means is simplified as compared to the Ringfeder® system, as the large number of taper members of Ringfeder® have been reduced to only two sleeve-shaped members, which together with ring member 7, screws 10 and washer 12 are furthermore delivered, stored and handled as a single, held-together unit.

The sleeve members are preferably manufactured in such a manner that a steel belt is treated in a rolling mill thus that one side face thereof is provided with the saw-tooth-shaped pattern extending in the longitudinal direction of the belt. Two lengths of appropriate dimensions thereupon are severed from the steel belt, whereupon these two lengths are positioned with the saw-tooth profiles facing and abutting each other, and being positioned displaced relative to each other so much as to obtain a portion projecting outside the other. Finally the two lengths of the steel belt positioned in such a manner relative to each other are subjected to a rolling operation forming them to a substantially cylindrical outer and inner form. At least one but preferably both sleeve members thus shaped have a transverse slot (not shown in the drawings), contributing to the radial expansion when the two sleeve members are pushed together, and due to this manufacturing operation the two sleeve members are held together as a unit, which can not be dismounted without disforming the unit.

Of course this embodiment can be dismounted in the same simple manner as that according to Fig. 1.

The invention is not limited to the embodiments shown in the drawings and described in connection thereto, but modifications and variants are possible within the scope of the appended claims. Thus it is evident that the possibilities for applications are not at all limited to bearings and gear wheels or the like but the attachment means can be used in numerous applications where a ring-formed member shall be fitted to a smooth shaft. In the two embodiments shown, a washer 12 has been positioned between the machine member/second sleeve member and the ring member, but this washer can be abolished and the screw tips can act directly on the end edge of the second sleeve. Furthermore it is evident, that the set screws 10 used for giving a pushing force on the second sleeve member, can be substituted by other means such as clamping members or the like.

## Claims

1. An attachment means intended for arresting a machine member (3, 13) having a substantially cylindrical bore on a cylindrical shaft (1), wherein the bore has a larger inner diameter than the outer diameter of the shaft, resulting in an annular space between said machine member and the shaft, in which space is inserted a pair of elements having mating, co-operating taper surfaces facing each other, said elements being intended at mutual displacement to change their overall radial size, thereby increasing or reducing a clamping force between the machine member and the shaft,
**characterized** therein,
that the means incorporates a first thin-walled sleeve member (5, 5') having a cylindrical inner surface arranged to enclose a portion of the shaft (1), and a second, thin-walled sleeve member (6, 6') having a cylindrical outer surface arranged to engage the bore of the machine member (3, 13), said second sleeve member (6, 6') enclosing the first sleeve member (5, 5'),
that the first and second sleeve members (5, 6; 5', 6') in their surfaces facing each other have a plurality of consecutive saw-tooth-shaped, axially tapering sections,
that a ring member (7) is provided about the shaft (1), axially spaced apart from the second sleeve member (6, 6'),
that said ring member in its hole has a circumferential groove (8), spaced apart from the side faces of the ring member (7),
that the first sleeve member (5, 5') projects outside one first end edge of the second sleeve member (6, 6'), and has an exterior circumferential ridge (9), projecting into the groove (8) in the ring member, thereby axially interconnecting the ring member and the second sleeve member, and
that the ring member (7) is provided with means (10) for applying an external pushing force on the said first one end edge on the second sleeve member for causing such mutual displacement between the first and second sleeve members (5, 6; 5', 6').

2. An attachment means as claimed in claim 1,
**characterized** therein,
that at least one of the first and the second sleeve members (5, 5'; 6, 6') is provided with a slot, extending mainly in axial direction.

3. An attachment means as claimed in claim 1 or 2,
**characterized** therein,
that the first and second sleeve members (5, 5'; 6, 6') together with ring member (7) and means (10) for applying a pushing force form a held-together unit (15).

4. An attachment means as claimed in anyone of the preceeding claims,
**characterized** therein,
that the first and second sleeve members (5, 5'; 6, 6') comprise longitudinal belt-shaped elements, provided with the saw-tooth-shaped tapering surface portions via a rolling operation or the like, and which in a rolling operation are formed to a sleeve unit comprising the two sleeve members as a held-together unit.

5. An attachment means as claimed in anyone of the preceeding claims,
**characterized** therein,
that the means for applying an axial force on the second sleeve member (6, 6') is constituted by at least one set screw (10) extending with its shank through a through bore (11) in the ring member (7) and arranged with its tips to transfer axial force to the end edge of the second sleeve member (6, 6').
